# EUROPEAN PATENT SPECIFICATION

(11) **EP 2 805 195 B1**
(45) Date of publication and mention of the grant of the patent: **13.06.2018**
(21) Application number: 12808735.0
(22) Date of filing: 10.12.2012
(51) Int. Cl.: H04Q 1/06, G02B 6/44, H04Q 1/02

(54) **FRAME WITH PIVOTAL SECONDARY DOORS AND METHOD FOR PIGTAIL MANAGEMENT**
RAHMEN MIT SEKUNDÄREN SCHWENKTÜREN FÜR PIGTALE-VERWALTUNG
CADRE AVEC PORTES SECONDAIRES PIVOTANTES POUR GESTION DE FIBRES AMORCES

(30) Priority: 22.12.2011 US 201161579252 P
(43) Date of publication of application: 26.11.2014
(73) Proprietor: CommScope Connectivity Belgium BVBA, 3010 Kessel-Lo (BE)
(72) Inventor: GEENS, Johan, 3380 Bunsbeek (BE); VERMEULEN, Pieter, 2260 Westerlo (BE); KEUSTERMANS, Erik, 3390 Houwaart (BE)
(74) Representative: Patentanwälte Bressel und Partner mbB
(86) International application number: PCT/EP2012/074911
(87) International publication number: WO 2013/092268

(56) References cited:
- EP-A2- 2 060 942
- US-A- 4 949 376
- US-A- 5 142 606
- US-A- 5 434 944
- US-A1- 2005 128 722
- US-A1- 2007 280 618
- US-A1- 2008 121 424
- US-A1- 2011 142 408
- US-B1- 6 792 191
- US-B1- 7 496 269

## Description

### Background

In the telecommunications industry, use of fiber optic cables for carrying transmission signals is rapidly growing. Fiber distribution frames are adapted to aid in the connection of fiber optic equipment, see for example US 7 496 269 B1, US 6 792 191 B1 and US 4 949 376 A. To connect fiber optic equipment in the fiber distribution frame or to connect fiber optic equipment between fiber distribution frames, fiber optic cable is routed between the fiber optic equipment and/or the fiber distribution frames. For example, feeder cables may be routed to the frame from an optical signal source; distribution cables may be routed from the frames to subscriber equipment; and patchcords may be routed between frames or between equipment within a frame.

Further development in fiber distribution frame systems is desired.

### Summary

Aspects of the present disclosure relate to a telecommunications frame according to claim 1, said telecommunications frame including a telecommunications frame defining an interior in which telecommunications components or cable management components may be disposed. A main door is coupled to the frame and configured to move along a first path between a closed position and an open position. A cable access door is coupled to the main door is configured to move with the main door along the first path between the closed and open positions. The cable access door also is configured to move relative to the main door along a second path between a blocking position and an unblocking position. The cable access door inhibits access to the frame interior when in the blocking position and provides a cable access gap leading to the frame interior when in the unblocking position even when the main door is in the closed position.

In some implementations, the cable access door pivots between the blocking and unblocking positions. In other implementations, the cable access door slides between the blocking and unblocking positions. In certain implementations, the first path extends generally horizontally and the second path extends generally vertically.

Other aspects of the present disclosure relate to a frame assembly according to claim 12, the frame assembly including a first telecommunications frame including at least a first main door having a cable access door; and a second telecommunications frame including at least a second main door having a second cable access door. Each cable access door is configured to move between open and closed positions with the respective main door. Each cable access door also is configured to move between blocking and unblocking positions relative to the respective main door.

In certain implementations, the first main door of the first frame is located adjacent the second main door of the second frame. In some such implementations, the first and second cable access doors provide a continuous gap leading to the interiors of the first and second frames when the first and second cable access doors are both at least partially in the unblocking position. In some implementations, the first and second cable access doors are configured to pivot between the blocking and unblocking positions. In other implementations, the first and second cable access doors are configured to slide between the blocking and unblocking positions.

Still other aspects of the present disclosure relate to a method according to claim 13. The method consists of managing optical fiber pigtails in a telecommunications frame including at least one door arrangement configured to move along a first path between an open position and a closed position. The method includes moving a moveable section of the door arrangement at least partially along a second path from a blocking position to an unblocking position without moving the door arrangement along the first path. Moving the moveable section of the door arrangement along the second path provides a cable access gap between the door arrangement and the bottom of the frame. The method also includes moving at least one optical fiber into the frame interior through each cable access gap; and moving the moveable section of the door arrangement to the blocking position to cover the cable access gap.

The cable access doors/moveable sections of the door arrangements enable a user to route one or more optical fibers quickly and easily through multiple optical fiber frames. Positioning the cable access doors/moveable sections in the unblocking positions creates a continuous gap through which the optical fibers may be inserted into the frames. The continuous gap may extend along adjacent frames so that a user need not manually pass the optical fibers behind the doors/door hinges of the frames.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### Brief Description of the Drawings

FIG. 1 is front elevational view of an example telecommunications frame including a first main door and a first cable access door in accordance with the principles of the present disclosure;
FIG. 2 is a perspective view of a first frame array including first and second frames that have cable access doors pivotally coupled to main doors and shown in the blocking positions in accordance with the principles of the present disclosure;
FIG. 3 is an enlarged view of a section of FIG. 2;
FIG. 4 is a perspective view of the first frame array of FIG. 2 with the cable access doors shown pivoted partially between the blocking and unblocking positions;
FIG. 5 is an enlarged view of a section of FIG. 4;
FIG. 6 is a perspective view of the first frame array of FIG. 2 with the cable access doors shown pivoted fully to and retained in the unblocking positions;
FIG. 7 is an enlarged view of a section of FIG. 6;
FIG. 8 is a perspective view of a second frame array including first and second frames that have cable access doors slideably coupled to main doors and shown slid partially between the blocking and unblocking positions;
FIG. 9 is an enlarged view of a section of FIG. 8;
FIG. 10 is a perspective view of the second frame array of FIG. 8 with the cable access doors shown slid fully to the unblocking positions; and

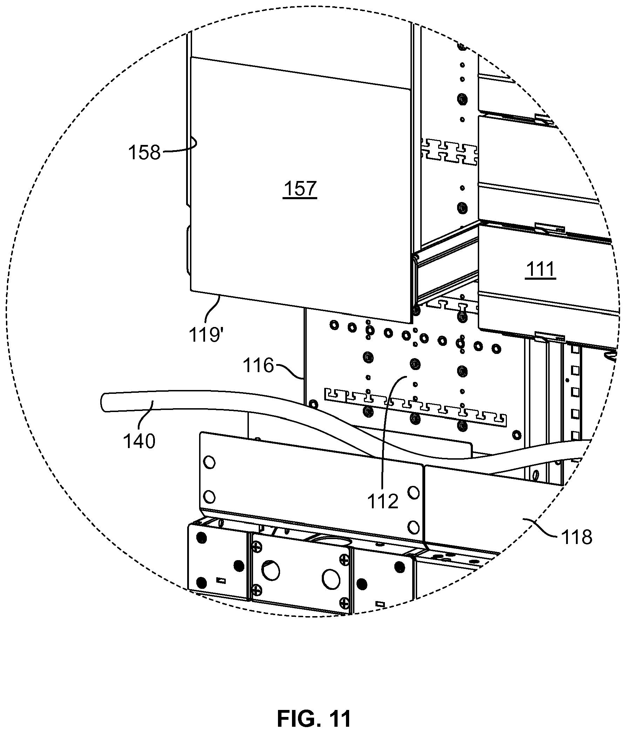

FIG. 11 is an enlarged view of a section of FIG. 10.

### Detailed Description

Reference will now be made in detail to the exemplary aspects of the present disclosure that are illustrated in the accompanying drawings. Wherever possible, the same reference numbers will be used throughout the drawings to refer to the same or like structure.

In general, the disclosure is directed to a frame including at least a first main door that moves along a first path to open and close the first main door. The frame also includes at least a cable access door that is coupled to the first main door. The cable access door is configured to move with the first door along the first path to close and open the cable access door. The cable access door also is configured to move along a second path relative to the first main door. The second path extends along a different plane than the first path. Opening the cable access door provides a cable access gap through which one or more optical fibers (e.g., one or more optical fiber cables) may enter the frame. In certain implementations, the frame may include multiple main doors and multiple cable access doors.

Multiple such frames may be positioned side-by-side and optical fibers (e.g., optical fiber cables) may be routed within each frame and between frames. Opening the cable access doors of each frame creates a continuous cable access gap that extends along the frames (e.g., at the bottom of the frames). The optical fibers may be routed through the adjacent frames by pushing the optical fibers through the continuous cable access gap from a front of the frames.

In some previous systems, a user may need to thread the optical fibers into the frame through a first side opening in the frame, behind a first door, and through a second side opening in the frame. To route the optical fibers behind the door, the user might have reached an arm around each side of the door while the door was open and fed the optical fibers from one hand to the other. Such a task could be difficult if the door was wide. In addition, the doors of certain types of adjacent frames may have opened towards each other so that a user would need to reach around a first side of one door and an opposite side of another door, further increasing the difficulty of routing the fibers. Alternatively, the user may have moved to a first side of the door, fed the optical fibers behind the door from the first side of the door, put the optical fibers down, moved to a second side of the door, and pulled the optical fibers behind the door from the second side of the door.

Providing frames with one or more cable access doors enables a user to route one or more optical fibers quickly and easily through one or more optical fiber frames. First, a user positions the cable access doors in unblocking positions to create a continuous gap through which the optical fibers may pass. The user moves (e.g., places) the optical fibers through the continuous gap as the user walks along a side-by-side array of frames. Creating the continuous gap frees the user from reaching around both sides of one or more doors to pass the fibers from hand to hand. Creating the continuous gap also frees users from continuously laying down the fibers, repositioning themselves relative to the doors, and picking the fibers back up to continue routing the fibers.

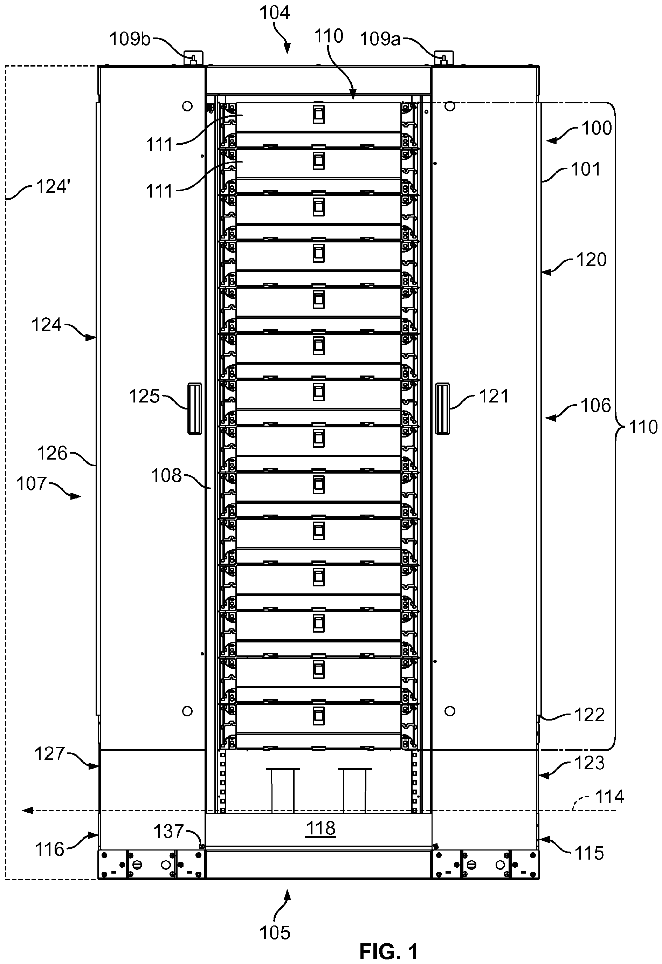

FIG. 1 illustrates one example implementation of a telecommunications frame 100 including a frame body 101 defining an interior 108 and having an open front 102, a rear 103, a top 104, a bottom 105, a first side 106, and a second side 107. One or more optical fiber management structures 113 (e.g., storage structures, organizing structures, guiding structures, etc.) may be disposed in the frame interior 108. In some implementations, the frame defines a coupling region 110 and/or a management region 112. In certain implementations, the coupling region 110 is disposed between two management regions 112. In other implementations, the coupling region 110, the management region 112, and any other desired region (e.g., a splicing region, a storage region, an organizing region, a fan-out region, etc.) may be disposed in any desired location within the frame 100.

One or more coupler modules 111 (e.g., patch panels, bladed chasses, sliding adapter modules, fixed adapter modules, splicing modules, etc.) may be disposed at the coupling region 110. Each coupler module 111 is configured to optically couple together at least two optical fibers. In certain implementations, front ports of each coupler module 111 are configured to receive patchcord optical fibers and rear ports of each coupler module 111 are configured to receive feeder and/or subscriber cable fibers. One or more cable management structures 113 (e.g., cable storage spools, bend radius limiters, retaining fingers, hooks, etc.) may be disposed at the management region 112. The cable storage structures 113 guide the optical cables (i.e., or fibers) through the frame interior 108, organize the cables/fibers, and/or inhibit excess bending of the cables/fibers.

The frame body 101 defines one or more cable ports 109 through which one or more fiber optic cables (e.g., feeder and/or subscriber cables) may be routed into the frame body 101. In certain implementations, the frame body 101 defines at least one cable port 109 at the top 104 of the frame body 101. In the example shown, the frame body 101 defines a first upper cable port 109a and a second upper cable port 109b. In certain implementations, the frame body 101 also defines one or more cable ports 109 at the bottom 105 of the frame body 101. In the example shown, cables entering the frame body 101 from the first or second cable ports 109a, 190b are routed downwardly through the management section 112 and to the coupling region 110. Connectorized ends of these cables may be plugged into rear ports of termination modules 111 disposed at the coupling region 110. Slack length of these cables may be stored in the management region 112.

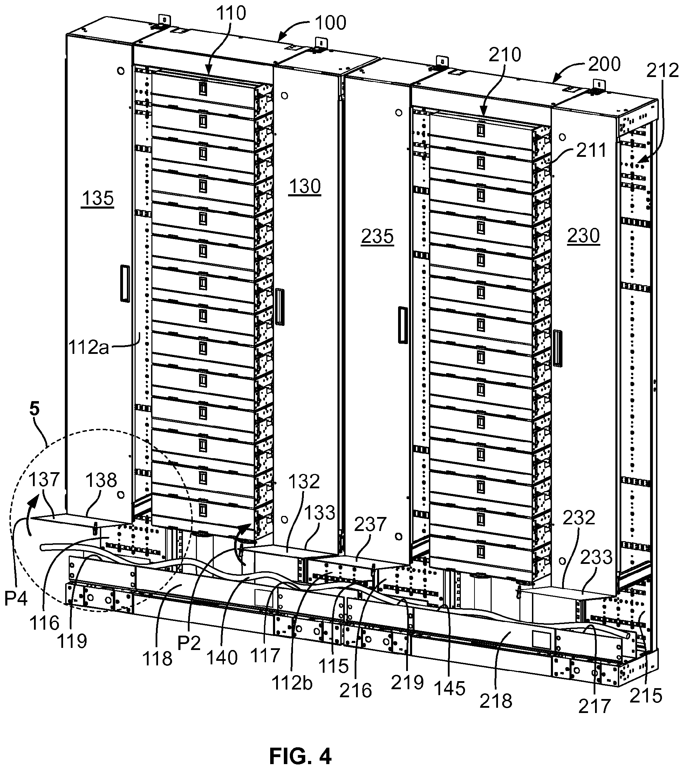

Patchcord cables from adjacent frames may be routed into the frame 100 through a first side port 115 and/or a second side port 116 (see FIG. 4). A cable routing path 114 extends from the first side port 115, along a bottom 105 of the frame 100, to the second side port 116. In certain implementations, one or more troughs 118 form the cable routing path 114. Patchcord cables entering the frame body 101 from the first or second side ports 115, 116 are routed upwardly to the coupling region 110. Connectorized ends of these patchcord cables may be plugged into front ports of termination modules 111 disposed at the coupling region 110. Slack length of these patchcord cables may be stored in the management region 112.

In general, at least a first door arrangement 120 is coupled to the frame body 101. In the example shown, the first door arrangement 120 is coupled to the first side 106 of the frame body 101 and an additional door arrangement 124 is coupled to the second side 107 of the frame body 101. In other implementations, the frame 100 may include an even greater number of door arrangements. Each door arrangement 120, 124 is configured to move between a closed position (FIG. 1) and an open position (e.g., see schematic representation of door 124' of FIG. 1). In certain implementations, the door arrangements 120, 124 may be locked or otherwise releaseably secured in the closed positions.

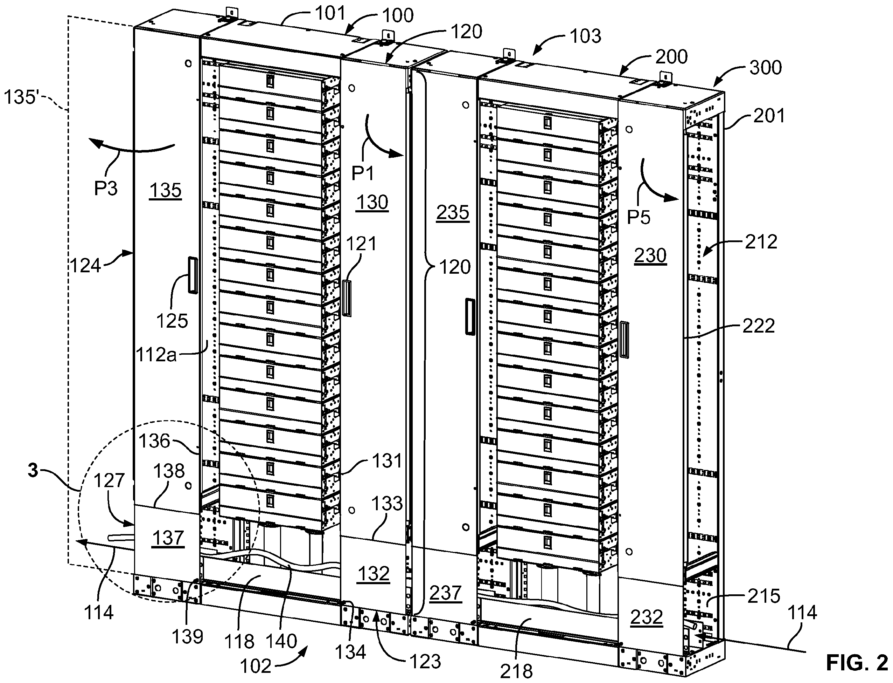

The first door arrangement 120 moves along a first path P1 and the additional door arrangement 124 moves along a third path P3 (FIG. 2). In some implementations, the door arrangements 120, 124 are pivotally coupled to the frame body 101. In certain implementations, the first and third paths P1, P3 extend along horizontal planes. For example, in some implementations, the door arrangements 120, 124 pivot away from each other about vertical hinge arrangement 122, 126, respectively. In the example shown, a first vertical hinge arrangement 122 is disposed at the first sides 106 of the frame bodies 101 and an additional vertical hinge arrangements 126 is disposed at the second sides 107 of the frame bodies 101. In other implementations, the door arrangements 120, 124 may pivot towards each other or in a common direction. Each door arrangement 120, 124 includes a handle 121, 125, respectively, by which the door arrangement 120, 124 may be moved along its respective path.

Each door arrangement 120, 124 at least partially covers the frame interior 108 when in the closed position. In some implementations, the door arrangements 120, 124 cooperate to fully cover the frame interior 108 when closed. In other implementations, the door arrangements 120, 124 are spaced from each other when closed (e.g., see FIG. 1). In the example shown, the first door arrangement 120 covers at least a first management region 112a (FIG. 4) when closed; the additional door arrangement 124 covers at least a second management region 112b (FIG. 4) when closed, and the coupling region 110 remains uncovered. In certain implementations, each coupler module 111 disposed in the coupling region 110 has its own cover.

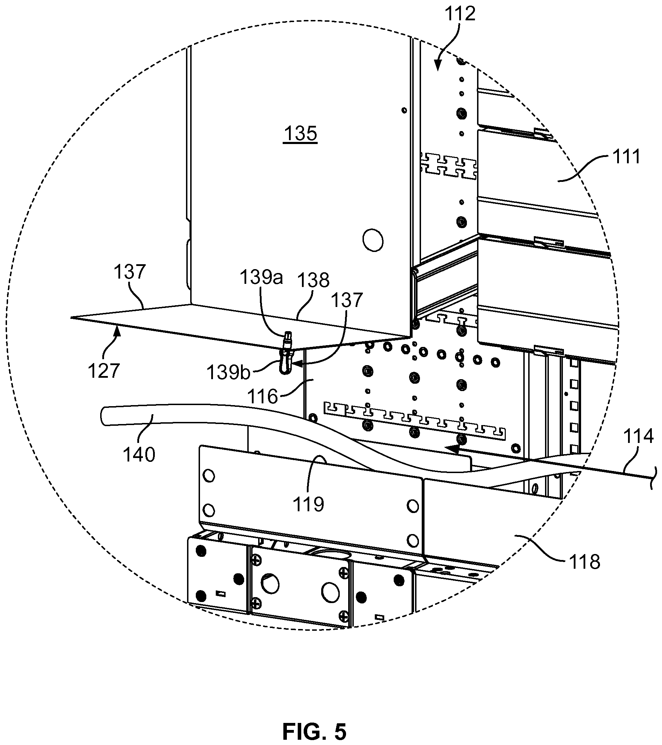

Each door arrangement 120, 124 includes a moveable section 123, 127 that is configured to move relative to a remainder of the door arrangement 120, 124, respectively, between blocking and unblocking positions. The moveable sections 123, 127 also move with the respective door arrangement 120, 124 between the open and closed positions. The moveable sections 123, 127 inhibit access to the frame interior 108 when in the blocking positions. The moveable sections 123, 127 of the door arrangements 120, 124 provide cable access gaps 117, 119, respectively, leading to the frame interior 108 when the moveable section 123, 127 is in the unblocking position even when the first door arrangement 120, 124 is in the closed positions (e.g., see FIG. 5).

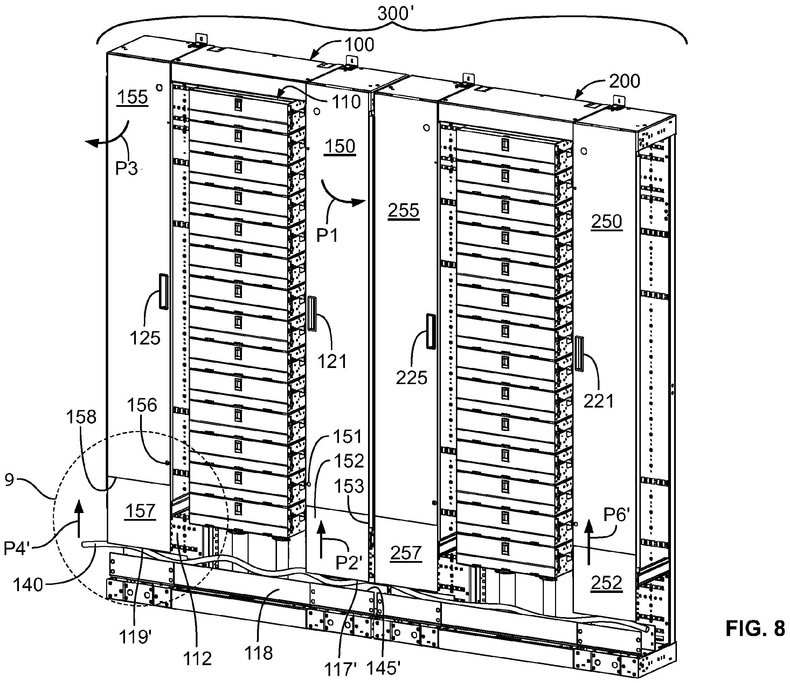

The moveable section 123 of the first door arrangement 120 moves along a second path P2, P2' and the moveable section 127 of the additional door arrangement 124 moves along a fourth path P4, P4' (FIGS. 4 and 8). In certain implementations, the second path P2, P2' is parallel with the fourth path P4, P4'. In certain implementations, the second path P2, P2' extends along a plane that is generally orthogonal to a plane in which the first path P1 extends and the fourth path P4, P4' extends along a plane that is generally orthogonal to a plane in which the third path P3 extends. In the example shown, the second and fourth paths P2, P2', P4, P4' extend along vertical planes.

In certain implementations, the moveable sections 123, 127 are disposed at a bottom of the door arrangements 120, 124. In the example shown, each cable access gap 117, 119 extends vertically between the bottom 105 of the frame body 101 and the remainder of the respective door arrangement 120, 124. In other implementations, however, the moveable sections 123, 127 (and hence the cable gaps 117, 119) may be disposed at any desired location on the frame body 101.

To route one or more optical fibers through the frame 100, a user moves the moveable section 123 of the first door arrangement 120 at least partially along the second path P2, P2' from the blocking position to the unblocking position without moving the first door arrangement 120 along the first path P1. Movement of the moveable section 123 of the first door arrangement 120 along the second path P2, P2' provides a cable access gap 117 between the first door arrangement 120 and the bottom 105 of the frame 100. The user then moves at least a first length of an optical fiber 140 into the frame interior 108 through the cable access gap 117. Subsequently, a user may move the moveable section 123 of the first door arrangement 120 to the blocking position to cover the cable access gap 117.

In certain implementations, the user also moves the moveable section 127 of the additional door arrangement 124 at least partially along the fourth path P4, P4' from the blocking position to the unblocking position without moving the additional door arrangement 124 along the third path P3. Movement of the moveable section 127 of the additional door arrangement 124 along the fourth path P4, P4' provides an additional cable access gap 119 between the additional door arrangement 124 and the bottom 105 of the frame 100. The user then moves at least a second length of the optical fiber 140 into the frame interior 108 through the additional cable access gap 119. Subsequently, a user may move the moveable section 127 of the additional door arrangement 124 to the blocking position to cover the additional cable access gap 119.

In certain implementations, the user also may move the moveable sections 123, 127 of the door arrangements 120, 124 to the unblocking position to facilitate removal of the optical fiber from the frame 100.

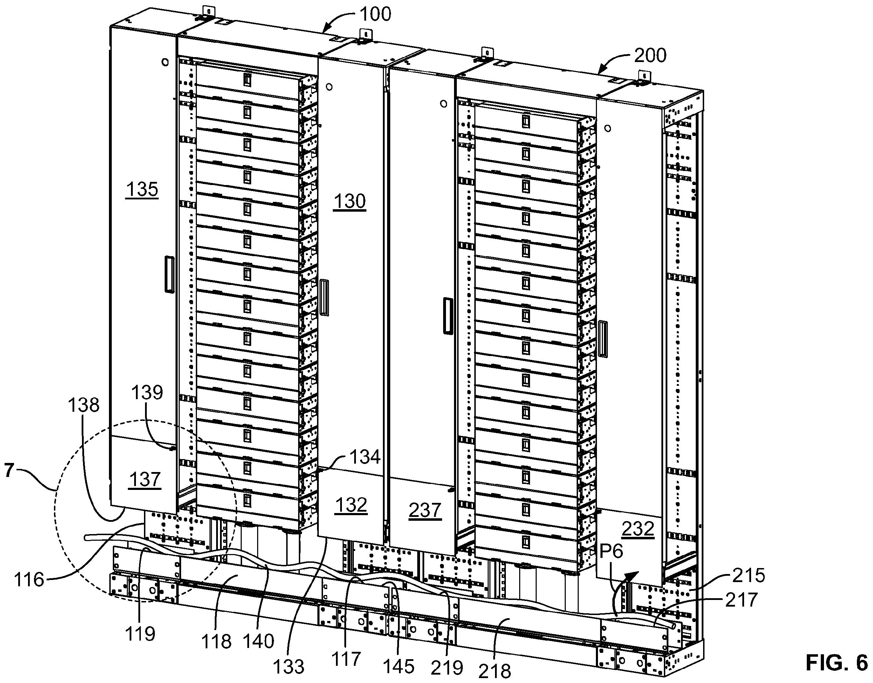

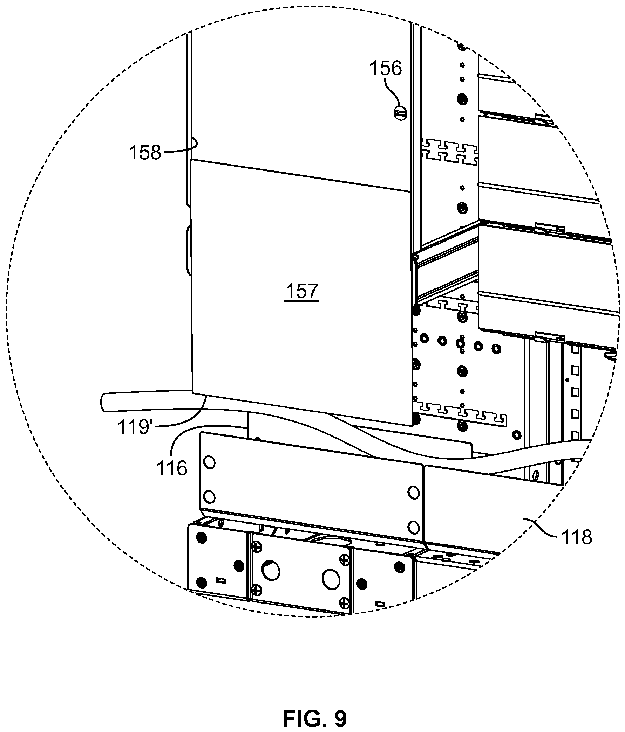

FIGS. 2-10 illustrate various example frame assemblies 300, 300' that each include at least a first frame 100. The first frame 100 is configured as described above except where otherwise stated. The frame 100 of FIGS. 2-7 includes a first example implementation of the first door arrangement 120 and the frame 100 of FIGS. 8-10 includes a second example implementation of the first door arrangement 120. As shown in FIGS. 2-7, the first and additional door arrangements 120, 124 can be implemented by a first and additional cable access door 132, 137 pivotally coupled to a first and additional main door 130, 135, respectively. In the example shown, each cable access door 132, 137 is pivotally coupled to the bottom of the respective main door 130, 135. In other implementations, however, the cable access doors 132, 137 may be pivotally coupled to other parts of the main door 130, 135.

The first main door 130 is coupled to the first side 106 of the frame body 101 using the first vertical hinge arrangement 122 and the additional main door 135 is coupled to the second side 107 of the frame body 101 using the additional vertical hinge arrangement 126. The first main door 130 is configured to move relative to the frame body 101 along the first path P1 between a closed position and an open position. The additional main door 135 is configured to move relative to the frame body 101 along the third path P3 between a closed position and an open position. Each main door 130, 135 covers at least a portion of the frame interior 108 when the main door 130, 135 is in the closed position. Each main door 130, 135 allows access to the at least a portion of the frame interior 108 when the main door 130, 135 is in the open position.

Each cable access door 132, 137 is configured to pivot with the respective main door 130, 135 along the respective path P1, P3 between the respective closed and open positions. Each cable access door 132, 137 also is configured to pivot relative to the respective main door 130, 135 along the respective path P2, P4 between the respective blocking and unblocking positions. In some implementations, the first path P1 extends along a first plane and the second path P2 extends along a second plane that is different from the first plane. In certain implementations, the first plane extends horizontally and the second plane extends vertically.

The first cable access door 132 provides the cable access gap 117 leading to the frame interior 108 when in the unblocking position even when the first main door 130 is in the closed position. The additional cable access door 137 provides the cable access gap 119 leading to the frame interior 108 when in the unblocking position even when the additional main door 135 is in the closed position. Each cable access door 132, 137 inhibits cable access to the frame interior 108 through the respective cable access gap 117, 119 when the cable access door 132, 137 is in the blocking positions.

As shown in FIGS. 4-7, each cable access door 132, 137 is configured to pivot about a respective hinge arrangement 133, 138 between the respective blocking and unblocking positions. In some implementations, the hinge arrangement 133, 138 extends across a width of the cable access door 132, 137. In other implementations, the hinge arrangement 133, 138 includes multiple hinges spaced along the width of the cable access door 132, 137. In some implementations, each cable access door 132, 137 is configured to pivot about 180° relative to the respective main door 130, 135. In other implementations, each cable access door 132, 137 is configured to pivot about 90° relative to the respective main door 130, 135.

In some implementations, the main doors 130, 135 and the respective cable access doors 132, 137 are configured to releasably engage each other when the respective cable access door 132, 137 is pivoted to the unblocking position. In certain implementations, each main door 130, 135 includes a first retention feature 131, 136 and each cable access door 132, 137 includes a second retention feature 134, 139 that is structured to engage the first retention feature 131, 136, respectively. Non-limiting examples of suitable retention features include attractive magnets, snaps, latches, a hook and eye, adhesive, Velcro®, straps, or any other fasteners.

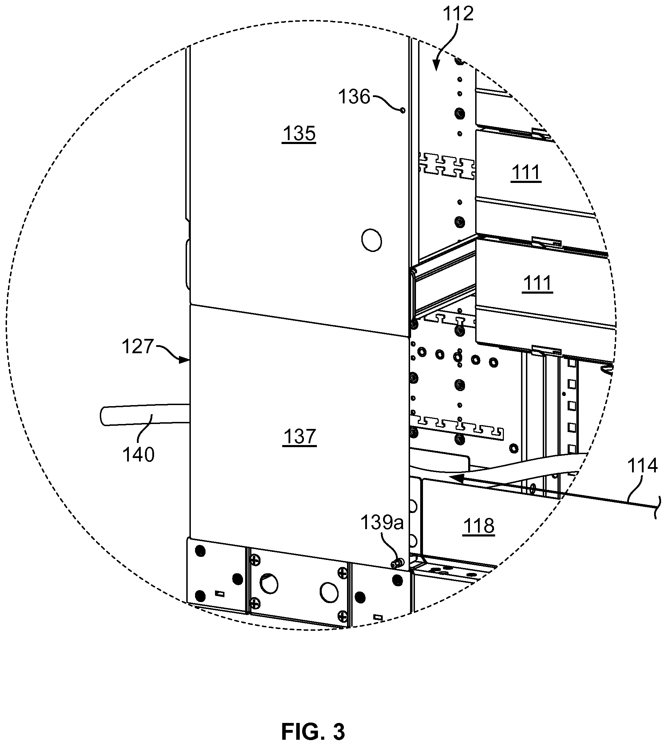

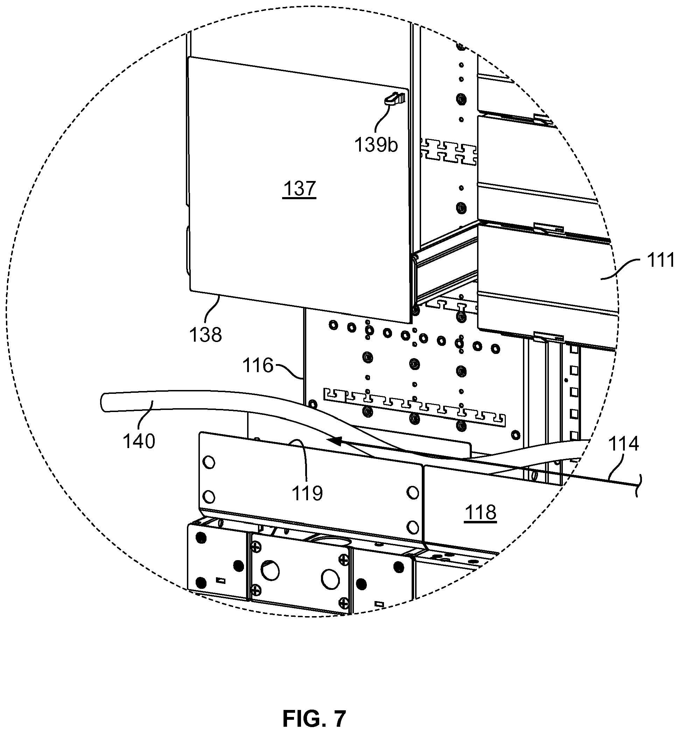

In the example shown, the first retention feature 131, 136 includes an aperture extending through the main door 130, 135 and the second retention feature 134, 139 includes a knob 134a, 139a (e.g., see FIG. 3) extending forwardly of the cable access door 132, 137. The knob 134a, 139a is sized to fit (e.g., snap-fit or friction-fit) within the aperture 131, 136. In certain implementations, the knob 134a, 139a may be used as a handle to lift the cable access door 132, 137. In some implementations, the cable access door 132, 137 also is configured to be retained in the blocking position. In the example shown, the second retention feature 134, 139 also includes a wedge 134b, 139b (e.g., see FIG. 7) that is shaped and configured to releasably engage with the frame body 101 when the cable access door 132, 137 is in the blocking position.

In FIGS. 2, 4, and 6, the first frame 100 is positioned adjacent an identical second frame 200. In other implementations, the second frame 200 may have a different structure and/or different components disposed thereon. For ease in understanding, common features between the first and second frames 100, 200 of FIGS. 2-7 share common reference numbers in this disclosure, except that features on the second frame 200 begin with a "2" instead of a "1". In still other implementations, the frame assemblies 300, 300' may include an even greater number of frames 100, 200.

The first side 106 of the first frame 100 is positioned adjacent the second side 207 of the second frame 200. To route one or more optical fibers 140 from the first frame 100 to the second frame 200, a user pivots the first cable access door 132 of the first frame 100 and the second cable access door 237 of the second frame 200 at least partially towards the unblocking positions. In certain implementations, the user pivots the access doors 132, 237 completely to the unblocking positions. The user does not move the main doors 130, 235 while moving the cable access doors 132, 237. The user may secure the cable access doors 132, 237 in the unblocking positions using the retention features 131, 134, 236, 239.

By moving the first cable access door 132, the user provides a first cable access gap 117 at the first side port 115 of the first frame 100. In addition, by moving the second cable access door 237, the user provides a second cable access gap 219 at the second side port 116 of the second frame 200. Each of the cable access gaps 117, 219 extends between the respective door arrangement 130, 235 and the bottom 105, 205 of the respective frame 100, 200. By creating the cable access gaps 117, 219, the user forms a continuous gap 145 leading to the frame interiors 108, 208 of both frames 100, 200.

The user then moves (e.g., places) at least a first length of an optical fiber 140 into both frame interiors 108, 208 through the continuous gap 145. Subsequently, a user may move the cable access doors 132, 237 back to the blocking position to close the continuous gap 145. In particular, each cable access door 132, 137 would cover the respective cable access gap 117, 219. In certain implementations, the user also may pivot the cable access doors 132, 137, 232, 237 to the unblocking positions to facilitate removal of the optical fiber from the frames 100, 200.

In other implementations, additional frames are positioned adjacent the first frame 100 and/or the second frame 200 to form an array 300 of frames. In such implementations, the user may open the second cable access door 137 of the first frame 100, the first cable access door 232 of the second frame 200, and/or the cable access doors of additional frames to form the continuous gap 145 so that the gap 145 extends along the array 300.

As shown in FIGS. 8-10, the first door arrangement 120 of the first frame 100 can be implemented by another example first cable access door 152 slidably coupled to a first main door 150. Similarly, the additional door arrangement 124 of the first frame 100 can be implemented by an example additional cable access door 157 slidably coupled to an additional main door 155. In the example shown, each cable access door 152, 157 is slidably coupled to the respective main door 150, 155 at the bottom of the respective main door 150, 155. In other implementations, however, the cable access doors 152, 157 may be slidably coupled to other parts of the main door 150, 155. In still other implementations, the cable access doors 152, 157 may be otherwise coupled to the main doors 150, 155.

The first main door 150 is coupled to the first side 106 of the frame body 101 and the additional main door 155 is coupled to the second side 107 of the frame body 101 as described above. The first main door 150 is configured to move relative to the frame body 101 along the first path P1 between a closed position and an open position. The additional main door 155 is configured to move relative to the frame body 101 along the third path P3 between a closed position and an open position. Each main door 150, 155 covers at least a portion of the frame interior 108 when the main door 150, 155 is in the closed position. Each main door 150, 155 allows access to the at least a portion of the frame interior 108 when the main door 150, 155 is in the open position.

Each cable access door 152, 157 is carried by the main door 150, 155 along the respective path P1, P3 between the respective closed and open positions. Each cable access door 152, 157 also is configured to slide relative to the respective main door 150, 155 along the respective path P2', P4' between the respective blocking and unblocking positions (e.g., see FIG. 8). In some implementations, the second and fourth paths P2', P4' extend along a first plane that is generally orthogonal to a plane along which the first and third paths P1, P3 extend. In the example shown, the second and fourth paths P2', P4' define parallel vertical lines. In some implementations, the cable access doors 152, 157 include handles or other grips to facilitate moving the cable access doors 152, 157. In other implementations, the cable access doors 152, 157 do not include handles, thereby lessening the chance of clothes or other parts of a user catching on the cable access doors 152, 157 as the user walks by the frame 100.

The first cable access door 152 provides the cable access gap 117' leading to the frame interior 108 when in the unblocking position even when the first main door 150 is in the closed position. The additional cable access door 157 provides the cable access gap 119' leading to the frame interior 108 when in the unblocking position even when the additional main door 155 is in the closed position. Each cable access door 152, 157 inhibits cable access to the frame interior 108 through the respective cable access gap 117', 119' when the cable access door 152, 157 is in the blocking positions.

Each cable access door 152, 157 is configured to slide along a respective guide arrangement 153, 158 between the respective blocking and unblocking positions. In certain implementations, each guide arrangement 153, 158 includes opposing rails along which the respective cable access door 152, 157 can slide. In some implementations, each guide arrangement 153, 158 is structured so that the respective cable access door 152, 157 slides over a front of the respective main door 150, 155. In other implementations, the guide arrangements 153, 158 may be structured so that the cable access doors 152, 157 slide behind the main doors 150, 155.

In some implementations, the main door 150, 155 and the respective cable access door 152, 157 are configured to releasably engage each other when the respective cable access door 152, 157 is pivoted to the unblocking position. In certain implementations, each main door 150, 155 includes a first retention feature 151, 156 and each cable access door 152, 157 includes a second retention feature that is structured to engage the first retention feature 151, 156, respectively. Non-limiting examples of suitable retention features include attractive magnets, snaps, latches, a hook and eye, adhesive, Velcro®, straps, or any other fasteners. In certain implementations, the cable access door 152, 157 also is configured to be retained in the blocking position.

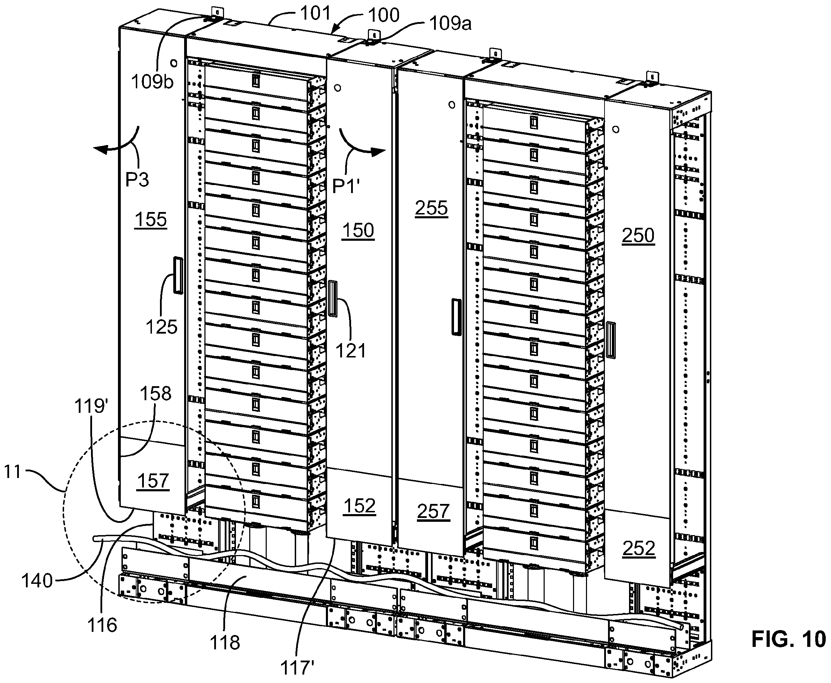

In FIGS. 8 and 10, the first frame 100 is positioned adjacent the identical second frame 200. As noted above, other implementations of the second frame 200 may have a different structure and/or different components disposed thereon. For ease in understanding, common features between the first and second frames 100, 200 of FIGS. 8-10 share common reference numbers in this disclosure, except that features on the second frame 200 begin with a "2" instead of a "1". In still other implementations, the frame assemblies 300, 300' may include an even greater number of frames 100, 200.

In the example shown, the first side 106 of the first frame 100 is positioned adjacent the second side 207 of the second frame 200. To route one or more optical fibers 140 from the first frame 100 to the second frame 200 of FIGS. 8-10, a user slides the first cable access door 152 of the first frame 100 and the second cable access door 257 of the second frame 200 at least partially towards the unblocking positions. For example, the user may slide the cable access doors 152, 257 upwardly relative to the main doors 150, 255. In certain implementations, the user slides the access doors 152, 257 completely to the unblocking positions. The user does not move the main doors 150, 255 while sliding the cable access doors 152, 257. The user may secure the cable access doors 152, 257 in the unblocking positions using the retention features 151, 154, 256, 259.

By sliding the first cable access door 152, the user provides a first cable access gap 117' at the first side port 115 of the first frame 100. In addition, by moving the second cable access door 257, the user provides a second cable access gap 219' at the second side port 116 of the second frame 200. Each of the cable access gaps 117', 219' extends between the respective main door 150, 255 and the bottom 105, 205 of the respective frame 100, 200. By creating the cable access gaps 117', 219', the user forms a continuous gap 145' leading to the frame interiors 108, 208 of both frames 100, 200.

The user then moves (e.g., places) at least a first length of an optical fiber 140 into both frame interiors 108, 208 through the continuous gap 145'. Subsequently, a user may slide the cable access doors 152, 257 back to the blocking position (e.g., downwardly) to close the continuous gap 145'. In particular, each cable access door 152, 157 would cover the respective cable access gap 117', 219'. In certain implementations, the user also may slide the cable access doors 152, 157, 252, 257 to the unblocking positions to facilitate removal of the optical fiber from the frames 100, 200.

In other implementations, additional frames are positioned adjacent the first frame 100 and/or the second frame 200 to form an array 300'. In such implementations, the user may open the second cable access door 157 of the first frame 100, the first cable access door 252 of the second frame 200, and/or the cable access doors of additional frames to form the continuous gap 145' so that the gap 145' extends along multiple frames of the array 300'.

Having described the preferred aspects and embodiments of the present invention, modifications and equivalents of the disclosed concepts may readily occur to one skilled in the art. However, it is intended that such modifications and equivalents be included within the scope of the claims which are appended hereto.

### Parts List

- 100: frame
- 101: frame body
- 102: front
- 103: rear
- 104: top
- 105: bottom
- 106: first side
- 107: second side
- 108: interior
- 109: cable ports
- 110: coupling region
- 111: coupler module
- 112: management region
- 113: cable management structures
- 114: cable routing path
- 115: first side port
- 116: second side port
- 117: first cable access gap
- 118: trough
- 119: additional cable access gap
- 120: first door arrangement
- 121: first door handle
- 122: first vertical hinge arrangement
- 123: first moveable section
- 124: additional door arrangement
- 125: additional door handle
- 126: additional vertical hinge arrangement
- 127: additional moveable section
- P1: first path
- P2, P2': second path
- P3: third path
- P4, P4': fourth path
- P5: fifth path
- P6, P6': sixth path
- 130: first main door
- 131: first retention feature
- 132: first cable access door
- 133: first horizontal hinge arrangement
- 134: second retention feature
- 135: additional main door
- 136: additional retention feature
- 137: additional cable access door
- 138: additional horizontal hinge arrangement
- 139: additional second retention feature
- 140: optical fibers
- 145, 145': continuous gap
- 150: first main door
- 151: first retention feature
- 152: first cable access door
- 153: first guide arrangement
- 154: second retention feature
- 155: additional main door
- 156: additional retention feature
- 157: additional cable access door
- 158: additional guide arrangement
- 159: additional second retention feature
- 200: second frame
- 201: second frame body
- 202: front
- 203: rear
- 204: top
- 205: bottom
- 206: first side
- 207: second side
- 208: interior
- 209: cable ports
- 210: second coupling region
- 211: coupler module
- 212: management region
- 113: cable management structures
- 214: cable routing path
- 215: first side opening
- 216: second side opening
- 217: second cable access gap
- 218: trough
- 219: additional cable access gap
- 220: second door arrangement
- 221: second door handle
- 222: second vertical hinge arrangement
- 223: second moveable section
- 224: second additional door arrangement
- 225: second additional door handle
- 226: second additional vertical hinge arrangement
- 227: second additional moveable section
- 230: second main door
- 231: first retention feature
- 232: second cable access door
- 233: second horizontal hinge arrangement
- 234: second retention feature
- 235: second additional main door
- 236: additional retention feature
- 237: second additional cable access door
- 238: additional horizontal hinge arrangement
- 239: additional second retention feature
- 250: second main door
- 252: second cable access door
- 253: second guide arrangement
- 255: second additional main door
- 257: second additional cable access door
- 158: additional guide arrangement
- 300: frame assembly
- 300': frame assembly

## Claims

1. A telecommunications frame (100, 200) comprising:
a frame body (101, 201) defining an interior (108,208) in which optical fiber management components (113,213) are disposed, the frame body (101,201) having afront (102,202) , a rear (103, 203), a top (104, 204) 'a bottom (105, 205) 'a first side (106, 206), and a second side (107, 207) , the frame having a first side opening (215) and a second side opening (216);
a first main door (130, 150, 230, 250) coupled to the first side (106, 206) of the frame body (101, 201) , the first main door (130, 150, 230, 250) being configured to move relative to the frame body (101, 201) along a first path (PI) between a closed position and an open position, the first main door (130, 150, 230, 250) covering at least a portion of the frame interior (108, 208) when the first main door (130, 150, 230, 250) is in the closed position, and the first main door (130, 150, 230, 250) allowing access to the at least a portion of the frame interior (108, 208) when the first main door (130, 150, 230, 250) is in the open position; and
a first cable access door (132, 152, 232, 252) coupled to the first main door (130, 150, 230, 250), the first cable access door (132, 152, 232, 252) being configured to move with the first main door (130, 150, 230, 250) along the first path (PI) between the closed and open positions, the first cable access door (132, 152, 232, 252) being configured to move relative to the first main door (130, 150, 230, 250) along a second path (P2, P2')between a blocking position and an unblocking position, the first cable access door (132, 152, 232, 252) inhibiting access to the frame interior (108, 208) when in the blocking position and the first cable access door (132,152,232,252) providing a cable access gap (117, 117, 217) extending between the first main door (130,150,230,250) and the bottom (105,205) of the frame (100,200), the cable access gap (117, 117', 217) leading to the frame interior (108, 208) when in the unblocking position even when the first main door (130, 150, 230, 250) is in the closed position, the access gap (117,117',217) being continuous with the first side opening (215) and the second side opening (216), thereby enabling a user to route cables quickly and easily through the frame between the first side opening (215) and the second side opening (216), wherein the first path (P1) extends along a first plane and the second path (P2, P2') extends along a second plane that is different from the first plane, wherein the first plane extends horizontally and the second plane extends vertically, wherein at least one of the first cable access door (132, 152, 232, 252) and the first main door (130, 150,230,250) includes a retention feature (131, 134, 151, 154,231,234,251,254) with which the first cable access door (132, 152, 232, 252) is releasably retained in the unblocking position.

2. The telecommunications frame of claim 1, wherein the first cable access door (132, 152, 232, 252) is configured to pivot relative to the first main door (130, 150, 230, 250) between the blocking and unblocking positions.

3. The telecommunications frame of claim 2, wherein the first cable access door (132, 152, 232, 252) is coupled to the first main door (130, 150, 230, 250) by at least one hinge (133, 233) extending along a bottom of the first main door (130, 150, 230, 250).

4. The telecommunications frame of claim 1, wherein the first cable access door (132, 152, 232, 252) is configured to slide relative to the first main door (130, 150, 230, 250) between the blocking and unblocking positions.

5. The telecommunications frame of claim 4, wherein the first cable access door (132, 152, 232, 252) is coupled to the first main door (130, 150, 230, 250) using guides (153, 253) along which the first cable access door (132, 152, 232, 252) slides, the guides (153, 253) extending vertically along opposite sides of the first main door (130, 150, 230, 250) so that the first cable access door (132, 152, 232, 252) slides upwardly from the blocking position to the unblocking position.

6. The telecommunications frame of claim 1, wherein the retention feature (131, 134, 151, 154,231,234,251,254) also is configured to releasably retain the first access door (130, 150, 230, 250) in the blocking position.

7. The telecommunications frame of claims 1-6, further comprising:
an additional main door (135, 155, 235, 255) coupled to the second side (107, 207) of the frame
body (101), the additional main door (135, 155, 235, 255) being configured to move relative to the frame body (101) along a third path (P3) between a closed position and an open position, the additional main door (135, 155, 235, 255) covering at least another portion of the frame interior (108) when the additional main door (135, 155, 235, 255) is in the closed position, and the additional main door (135, 155, 235, 255) allowing access to the at least another portion of the frame interior (108, 208) when the additional main door (135, 155,235, 255) is in the open position; and
an additional cable access door (137, 157,237,257) coupled to the second main door (135, 155,235,255), the second cable access door (137, 157,237,257) being configured to move with the additional main door (135, 155, 235, 255) along the third path (P3) between the respective closed and open positions, the additional cable access door (137, 157,237, 257) being configured to move relative to the additional main door (135, 155, 235, 255) along a fourth path (P4, P4') between a blocking position and anunblocking position, the additional cable access door (137, 157,237,257) inhibiting access to the frame interior (108) when in the blocking position and the additional cable access door (137, 157,237, 257) providing a second cable access gap (119, 119',219) leading to the frame interior (108,208) when in the unblocking position even when the additional main door (135, 155,235, 255) is in the closed position.

8. The telecommunications frame of claim 7, wherein the first and second main doors (130, 135, 150, 155, 230, 235, 250, 255) cooperate to cover an entire front (102,202) of the frame interior (108,208) when the first and second main doors (130, 135, 150, 155, 230, 235, 250, 255) are both are closed.

9. The telecommunications frame of claim 7, wherein the first and second main doors (130, 135, 150, 155, 230, 235, 250, 255) are spaced from each other when both are closed.

10. The telecommunications frame of claim 7, further comprising a cable routing path (114) extending horizontally between the first and second cable access doors (132, 137, 152, 157,232,237,252,257).

11. The telecommunications frame of claim 10, wherein the cable routing path (114,214) is defined by a horizontal trough (118,218) disposed at the bottom (105,205) of the frame body (101,201).

12. A frame assembly comprising a first telecommunications frame (100) in accordance with claims 1-11 and a second telecommunications frame (200) in accordance with claims 1-11, wherein the first telecommunications frame (100) defines an interior (108);
and wherein a second telecommunications frame (200) defines an interior (208), the second frame (200) including at least a second main door (235, 255) having a second cable access door (237, 257), the second cable access door (237, 257) being configured to move between open and closed positions with the second main door (235,255) and being configured to move between blocking and unblocking positions relative to the second main door (235, 255);
wherein the first main door (130, 150) of the first frame (100) is located adjacent the second main door (235, 255) of the second frame (200), and wherein the first and second
cable access doors (132, 152,237,257) provide a continuous gap (145, 145') leading to the interiors (108, 208) of the first and second frames (100, 200) when the first and second cable access doors (132, 152,237,257) are both at least partially in the unblocking position and when the first and second main doors (130, 150, 235, 255) are in the closed positions.

13. A method managing optical fibers (140) across telecommunications frames (100) in accordance with claims 1-12 comprising:
providing a first telecommunications frame (100) in accordance with claims 1-12, the first telecommunications frame (100) defining an interior (108) in which optical fiber management components (113) are disposed, the first frame (100) including at least a first door arrangement (120), the first door arrangement (120) being configured to
move along a first path (PI) between an open position and a closed position, the first door arrangement (120) covering at least a portion of a front (102) of the frame interior (108) when the first door arrangement (120) is in the closed position and the first door arrangement (120) allowing access to the frame interior (108) when the first door arrangement (120) is in the open position;
moving a moveable section (123, 127, 132, 137, 152, 157) of the first door arrangement (120) at least partially along a second path (P2) from a blocking position to an unblocking position without moving the first door arrangement (120) along the first path (PI), wherein moving the moveable section (123, 127, 132, 137, 152, 157) of the first door arrangement (120) along the second path (P2, P2') provides a cable access gap (117, 117')
between the first door arrangement (120) and the bottom (105) of the frame (100);
moving at least one optical fiber (140) into the frame interior (108) through the cable access gap (117, 117'); and
moving the moveable section (123, 127, 132, 137, 152, 157) of the first door arrangement (120) to the blocking position to cover the cable access gap (117, 117').

## Patentansprüche

1. Rahmen für Telekommunikationstechnik (100, 200), aufweisend:
einen Rahmenkörper (101, 201), der einen Innenraum (108, 208) definiert, in dem Komponenten (113, 213) zur Verwaltung von Lichtwellenleitern angeordnet sind, wobei der Rahmenkörper (101, 201) eine Vorderseite (102, 202), eine Rückseite (103, 203), eine Oberseite (104, 204), eine Unterseite (105, 205), eine erste Seite (106, 206) und eine zweite Seite (107, 207) aufweist, wobei der Rahmen eine erste Seitenöffnung (215) und eine zweite Seitenöffnung (216) aufweist;
eine erste Haupttür (130, 150, 230, 250), die mit der ersten Seite (106, 206) des Rahmenkörpers (101, 201) verbunden ist, wobei die erste Haupttür (130, 150, 230, 250) dafür ausgelegt ist, sich in Bezug auf den Rahmenkörper (101, 201) entlang eines ersten Weges (P1) zwischen einer geschlossenen Stellung und einer geöffneten Stellung zu bewegen, wobei die erste Haupttür (130, 150, 230, 250) mindestens einen Abschnitt des Rahmeninnenraums (108, 208) abdeckt, wenn sich die erste Haupttür (130, 150, 230, 250) in der geschlossenen Stellung befindet, und wobei die erste Haupttür (130, 150, 230, 250) einen Zugriff auf den mindestens einen Abschnitt des Rahmeninnenraums (108, 208) ermöglicht, wenn sich die erste Haupttür (130, 150, 230, 250) in der geöffneten Stellung befindet; und
eine erste Kabelzugriffstür (132, 152, 232, 252), die mit der ersten Haupttür (130, 150, 230, 250) verbunden ist, wobei die erste Kabelzugriffstür (132, 152, 232, 252) dafür ausgelegt ist, sich mit der ersten Haupttür (130, 150, 230, 250) entlang des ersten Weges (P1) zwischen der geschlossenen und der geöffneten Stellung zu bewegen, wobei die erste Kabelzugriffstür (132, 152, 232, 252) dafür ausgelegt ist, sich in Bezug auf die erste Haupttür (130, 150, 230, 250) entlang eines zweiten Weges (P2, P2') zwischen einer Blockierstellung und einer Freigabestellung zu bewegen, wobei die erste Kabelzugriffstür (132, 152, 232, 252) einen Zugriff auf den Rahmeninnenraum (108, 208) verhindert, wenn sie sich in der Blockierstellung befindet, und wobei die erste Kabelzugriffstür (132, 152, 232, 252) einen Kabelzugriffsspalt (117, 117', 217) bereitstellt, der sich zwischen der ersten Haupttür (130, 150, 230, 250) und der Unterseite (105, 205) des Rahmens (100, 200) erstreckt, wobei der Kabelzugriffsspalt (117, 117', 217), wenn er sich in der Freigabestellung befindet, selbst dann in den Rahmeninnenraum (108, 208) führt, wenn sich die erste Haupttür (130, 150, 230, 250) in der geschlossenen Stellung befindet, wobei der Kabelzugriffsspalt (117, 117', 217) mit der ersten Seitenöffnung (215) und der zweiten Seitenöffnung (216) zusammenhängt, wodurch einem Benutzer ermöglicht wird, Kabel schnell und einfach zwischen der ersten Seitenöffnung (215) und der zweiten Seitenöffnung (216) durch den Rahmen zu führen, wobei sich der erste Weg (P1) entlang einer ersten Ebene erstreckt und sich der zweite Weg (P2, P2') entlang einer zweiten Ebene erstreckt, die sich von der ersten Ebene unterscheidet, wobei sich die erste Ebene in horizontaler Richtung erstreckt und sich die zweite Ebene in vertikaler Richtung erstreckt, wobei mindestens eine von der ersten Kabelzugriffstür (132, 152, 232, 252) und der ersten Haupttür (130, 150, 230, 250) ein Haltemerkmal (131, 134, 151, 154, 231, 234, 251, 254) aufweist, mit dem die erste Kabelzugriffstür (132, 152, 232, 252) lösbar in der Freigabestellung gehalten wird.

2. Rahmen für Telekommunikationstechnik nach Anspruch 1, wobei die erste Kabelzugriffstür (132, 152, 232, 252) dafür ausgelegt ist, in Bezug auf die erste Haupttür (130, 150, 230, 250) zwischen der Blockierstellung und der Freigabestellung zu schwenken.

3. Rahmen für Telekommunikationstechnik nach Anspruch 2, wobei die erste Kabelzugriffstür (132, 152, 232, 252) mit der ersten Haupttür (130, 150, 230, 250) über mindestens ein Scharnier (133, 233), das sich entlang einer Unterseite der ersten Haupttür (130, 150, 230, 250) erstreckt, verbunden ist.

4. Rahmen für Telekommunikationstechnik nach Anspruch 1, wobei die erste Kabelzugriffstür (132, 152, 232, 252) dafür ausgelegt ist, sich in Bezug auf die erste Haupttür (130, 150, 230, 250) zwischen der Blockierstellung und der Freigabestellung zu verschieben.

5. Rahmen für Telekommunikationstechnik nach Anspruch 4, wobei die erste Kabelzugriffstür (132, 152, 232, 252) mit der ersten Haupttür (130, 150, 230, 250) unter Verwendung von Führungen (153, 253) verbunden ist, entlang welcher sich die erste Kabelzugriffstür (132, 152, 232, 252) verschiebt, wobei sich die Führungen (153, 253) derart in vertikaler Richtung entlang entgegengesetzter Seiten der ersten Haupttür (130, 150, 230, 250) erstrecken, dass sich die erste Kabelzugriffstür (132, 152, 232, 252) von der Blockierstellung nach oben in die Freigabestellung verschiebt.

6. Rahmen für Telekommunikationstechnik nach Anspruch 1, wobei das Haltemerkmal (131, 134, 151, 154, 231, 234, 251, 254) außerdem dafür ausgelegt ist, die erste Zugriffstür (130, 150, 230, 250) lösbar in der Blockierstellung zu halten.

7. Rahmen für Telekommunikationstechnik nach Anspruch 1-6, ferner aufweisend:
eine zusätzliche Haupttür (135, 155, 235, 255), die mit der zweiten Seite (107, 207) des Rahmenkörpers (101) verbunden ist, wobei die zusätzliche Haupttür (135, 155, 235, 255) dafür ausgelegt ist, sich in Bezug auf den Rahmenkörper (101) entlang eines dritten Weges (P3) zwischen einer geschlossenen Stellung und einer geöffneten Stellung zu bewegen, wobei die zusätzliche Haupttür (135, 155, 235, 255) mindestens einen weiteren Abschnitt des Rahmeninnenraums (108) abdeckt, wenn sich die zusätzliche Haupttür (135, 155, 235, 255) in der geschlossenen Stellung befindet, und wobei die zusätzliche Haupttür (135, 155, 235, 255) einen Zugriff auf den mindestens einen weiteren Abschnitt des Rahmeninnenraums (108, 208) ermöglicht, wenn sich die zusätzliche Haupttür (135, 155, 235, 255) in der geöffneten Stellung befindet; und
eine zusätzliche Kabelzugriffstür (137, 157, 237, 257), die mit der zweiten Haupttür (135, 155, 235, 255) verbunden ist, wobei die zweite Kabelzugriffstür (137, 157, 237, 257) dafür ausgelegt ist, sich mit der zusätzlichen Haupttür (135, 155, 235, 255) entlang des dritten Weges (P3) zwischen der jeweiligen geschlossenen und geöffneten Stellung zu bewegen, wobei die zusätzliche Kabelzugriffstür (137, 157, 237, 257) dafür ausgelegt ist, sich in Bezug auf die zusätzliche Haupttür (135, 155, 235, 255) entlang eines vierten Weges (P4, P4') zwischen einer Blockierstellung und einer Freigabestellung zu bewegen, wobei die zusätzliche Kabelzugriffstür (137, 157, 237, 257) einen Zugriff auf den Rahmeninnenraum (108) verhindert, wenn sie sich in der Blockierstellung befindet, und die zusätzliche Kabelzugriffstür (137, 157, 237, 257) einen zweiten Kabelzugriffsspalt (119, 119', 219) bereitstellt, der, wenn er sich in der Freigabestellung befindet, selbst dann in den Rahmeninnenraum (108, 208) führt, wenn sich die zusätzliche Haupttür (135, 155, 235, 255) in der geschlossenen Stellung befindet.

8. Rahmen für Telekommunikationstechnik nach Anspruch 7, wobei die erste und die zweite Haupttür (130, 135, 150, 155, 230, 235, 250, 255) zusammenwirken, um eine gesamte Vorderseite (102, 202) des Rahmeninnenraums (108, 208) abzudecken, wenn sowohl die erste als auch die zweite Haupttür (130, 135, 150, 155, 230, 235, 250, 255) geschlossen ist.

9. Rahmen für Telekommunikationstechnik nach Anspruch 7, wobei die erste und die zweite Haupttür (130, 135, 150, 155, 230, 235, 250, 255) voneinander beabstandet sind, wenn beide geschlossen sind.

10. Rahmen für Telekommunikationstechnik nach Anspruch 7, der ferner einen Kabelführungsweg (114) aufweist, der sich in horizontaler Richtung zwischen der ersten und der zweiten Kabelzugriffstür (132, 137, 152, 157, 232, 237, 252, 257) erstreckt.

11. Rahmen für Telekommunikationstechnik nach Anspruch 10, wobei der Kabelführungsweg (114, 214) durch eine horizontale Wanne (118, 218) definiert ist, die an der Unterseite (105, 205) des Rahmenkörpers (101, 201) angeordnet ist.

12. Rahmenanordnung, die einen ersten Rahmen (100) für Telekommunikationstechnik nach Anspruch 1-11 und einen zweiten Rahmen (200) für Telekommunikationstechnik nach Anspruch 1-11 aufweist, wobei der erste Rahmen (100) für Telekommunikationstechnik einen Innenraum (108) definiert; und wobei ein zweiter Rahmen (200) für Telekommunikationstechnik einen Innenraum (208) definiert, wobei der zweite Rahmen (200) mindestens eine zweite Haupttür (235, 255) aufweist, die eine zweite Kabelzugriffstür (237, 257) aufweist, wobei die zweite Kabelzugriffstür (237, 257) dafür ausgelegt ist, sich mit der zweiten Haupttür (235, 255) zwischen einer geöffneten und einer geschlossenen Stellung zu bewegen und dafür ausgelegt ist, sich in Bezug auf die zweite Haupttür (235, 255) zwischen einer Blockierstellung und einer Freigabestellung zu bewegen;
wobei die erste Haupttür (130, 150) des ersten Rahmens (100) benachbart zu der zweiten Haupttür (235, 255) des zweiten Rahmens (200) angeordnet ist, und wobei die erste und die zweite Kabelzugriffstür (132, 152, 237, 257) einen zusammenhängenden Spalt (145, 145') bereitstellen, der in die Innenräume (108, 208) des ersten und des zweiten Rahmens (100, 200) führt, wenn sich sowohl die erste als auch die zweite Kabelzugriffstür (132, 152, 237, 257) mindestens teilweise in der Freigabestellung befinden und sich die erste und zweite Haupttür (130, 150, 235, 255) in der geschlossenen Stellung befinden.

13. Verfahren zur Verwaltung von Lichtwellenleitern (140) über Rahmen (100) für Telekommunikationstechnik nach Anspruch 1-12, umfassend:
Bereitstellen eines ersten Rahmens (100) für Telekommunikationstechnik nach Anspruch 1-12, wobei der erste Rahmen (100) für Telekommunikationstechnik einen Innenraum (108) definiert, in dem Komponenten (113) zur Verwaltung von Lichtwellenleitern angeordnet sind, wobei der erste Rahmen (100) mindestens eine erste Türanordnung (120) aufweist, wobei die erste Türanordnung (120) dafür ausgelegt ist, sich entlang eines ersten Weges (P1) zwischen einer geöffneten Stellung und einer geschlossenen Stellung zu bewegen, wobei die erste Türanordnung (120) mindestens einen Abschnitt einer Vorderseite (102) des Rahmeninnenraums (108) abdeckt, wenn sich die erste Türanordnung (120) in der geschlossenen Stellung befindet, und wobei die erste Türanordnung (120) einen Zugriff auf den Rahmeninnenraum (108) ermöglicht, wenn sich die erste Türanordnung (120) in der geöffneten Stellung befindet;
Bewegen eines beweglichen Abschnitts (123, 127, 132, 137, 152, 157) der ersten Türanordnung (120) mindestens teilweise entlang eines zweiten Weges (P2) von einer Blockierstellung in eine Freigabestellung, ohne die erste Türanordnung (120) entlang des ersten Weges (P1) zu bewegen, wobei das Bewegen des beweglichen Abschnitts (123, 127, 132, 137, 152, 157) der ersten Türanordnung (120) entlang des zweiten Weges (P2, P2') einen Kabelzugriffsspalt (117, 117') zwischen der ersten Türanordnung (120) und der Unterseite (105) des Rahmens (100) bereitstellt;
Bewegen von mindestens einem Lichtwellenleiter (140) durch den Kabelzugriffsspalt (117, 117') in den Rahmeninnenraum (108); und
Bewegen des beweglichen Abschnitts (123, 127, 132, 137, 152, 157) der ersten Türanordnung (120) in die Blockierstellung, um den Kabelzugriffsspalt (117, 117') abzudecken.

## Revendications

1. Cadre de télécommunication (100, 200), comprenant :
un corps de cadre (101, 201) définissant un intérieur (108, 208) dans lequel des composants de gestion de fibre optique (113, 213) sont disposés, le corps de cadre (101, 201) ayant une partie avant (102, 202), une partie arrière (103, 203), une partie supérieure (104, 204), une partie inférieure (105, 205), un premier côté (106, 206), et un second côté (107, 207), le cadre ayant une première ouverture latérale (215) et une seconde ouverture latérale (216) ;
une première porte principale (130, 150, 230, 250) couplée au premier côté (106, 206) du corps de cadre (101, 201), la première porte principale (130, 150, 230, 250) étant conçue pour se déplacer par rapport au corps de cadre (101, 201) le long d'un premier trajet (P1) entre une position fermée et une position ouverte, la première porte principale (130, 150, 230, 250) couvrant au moins une partie de l'intérieur (108, 208) du cadre lorsque la première porte principale (130, 150, 230, 250) est en position fermée, et la première porte principale (130, 150, 230, 250) permettant l'accès à l'au moins une partie de l'intérieur (108, 208) du cadre lorsque la première porte principale (130, 150, 230, 250) est en position ouverte ; et
une première porte d'accès aux câbles (132, 152, 232, 252) couplée à la première porte principale (130, 150, 230, 250), la première porte d'accès aux câbles (132, 152, 232, 252) étant conçue pour se déplacer avec la première porte principale (130, 150, 230, 250) le long du premier trajet (P1) entre les positions fermée et ouverte, la première porte d'accès aux câbles (132, 152, 232, 252) étant conçue pour se déplacer par rapport à la première porte principale (130, 150, 230, 250) le long d'un second chemin (P2, P2') entre une position de blocage et une position de déblocage, la première porte d'accès aux câbles (132, 152, 232, 252) empêchant l'accès à l'intérieur (108, 208) du cadre en position de blocage et la première porte d'accès aux câbles (132, 152, 232, 252) fournissant un espace d'accès aux câbles (117, 117', 217) s'étendant entre la première porte principale (130, 150, 230, 250) et la partie inférieure (105, 205) du cadre (100, 200), l'espace d'accès aux câbles (117, 117', 217) menant à l'intérieur (108, 208) du cadre en position de déblocage même lorsque la première porte principale (130, 150, 230, 250) est en position fermée, l'espace d'accès aux câbles (117, 117', 217) étant continu avec la première ouverture latérale (215) et la seconde ouverture latérale (216), permettant ainsi à un utilisateur de faire passer les câbles rapidement et facilement à travers le cadre entre la première ouverture latérale (215) et la seconde ouverture latérale (216), le premier trajet (P1) s'étendant le long d'un premier plan et le second trajet (P2, P2') s'étendant le long d'un second plan qui est différent du premier plan, le premier plan s'étendant horizontalement et le second plan s'étendant verticalement, la première porte d'accès aux câbles (132, 152, 232, 252) et/ou la première porte principale (130, 150, 230, 250) comprenant un élément de retenue (131, 134, 151, 154, 231, 234, 251, 254) au moyen duquel la première porte d'accès aux câbles (132, 152, 232, 252) est retenue de manière libérable dans la position de déblocage.

2. Cadre de télécommunication selon la revendication 1, la première porte d'accès aux câbles (132, 152, 232, 252) étant conçue pour pivoter par rapport à la première porte principale (130, 150, 230, 250) entre les positions de blocage et de déblocage.

3. Cadre de télécommunication selon la revendication 2, la première porte d'accès aux câbles (132, 152, 232, 252) étant couplée à la première porte principale (130, 150, 230, 250) par au moins une charnière (133, 233) s'étendant le long d'une partie inférieure de la première porte principale (130, 150, 230, 250).

4. Cadre de télécommunication selon la revendication 1, la première porte d'accès aux câbles (132, 152, 232, 252) étant conçue pour coulisser par rapport à la première porte principale (130, 150, 230, 250) entre les positions de blocage et de déblocage.

5. Cadre de télécommunication selon la revendication 4, la première porte d'accès aux câbles (132, 152, 232, 252) étant couplée à la première porte principale (130, 150, 230, 250) à l'aide de guides (153, 253) le long desquels glisse la première porte d'accès aux câbles (132, 152, 232, 252), les guides (153, 253) s'étendant verticalement le long de côtés opposés de la première porte principale (130, 150, 230, 250) de sorte que la première porte d'accès aux câbles (132, 152, 232, 252) coulisse vers le haut de la position de blocage à la position de déblocage.

6. Cadre de télécommunication selon la revendication 1, l'élément de retenue (131, 134, 151, 154, 231, 234, 251, 254) étant également conçu pour retenir de manière libérable la première porte d'accès (130, 150, 230, 250) en position de blocage.

7. Cadre de télécommunication selon les revendications 1 à 6, comprenant en outre :
une porte principale supplémentaire (135, 155, 235, 255) couplée au second côté (107, 207) du corps de cadre (101), la porte principale supplémentaire (135, 155, 235, 255) étant conçue pour se déplacer par rapport au corps de cadre (101) le long d'un troisième trajet (P3) entre une position fermée et une position ouverte, la porte principale supplémentaire (135, 155, 235, 255) couvrant au moins une autre partie de l'intérieur (108) du cadre lorsque la porte principale supplémentaire (135, 155, 235, 255) est en position fermée, et la porte principale supplémentaire (135, 155, 235, 255) permettant l'accès à au moins une autre partie de l'intérieur (108, 208) du cadre lorsque la porte principale supplémentaire (135, 155, 235, 255) est en position ouverte ; et
une porte d'accès aux câbles supplémentaire (137, 157, 237, 257) couplée à la seconde porte principale (135, 155, 235, 255), la seconde porte d'accès aux câbles (137, 157, 237, 257) étant conçue pour se déplacer avec la porte principale supplémentaire (135, 155, 235, 255) le long du troisième trajet (P3) entre les positions fermée et ouverte respectives, la porte d'accès aux câbles supplémentaire (137, 157, 237, 257) étant conçue pour se déplacer par rapport à la porte principale supplémentaire (135, 155, 235, 255) le long d'un quatrième trajet (P4, P4') entre une position de blocage et une position de déblocage, la porte d'accès au câble supplémentaire (137, 157, 237, 257) empêchant l'accès à l'intérieur (108) du cadre en position de blocage et la porte d'accès au câble supplémentaire (137, 157, 237, 257) fournissant un second espace d'accès aux câbles (119, 119', 259) menant à l'intérieur (108, 208) du cadre en position de déblocage même lorsque la porte principale supplémentaire (135, 155, 235, 255) est en position fermée.

8. Cadre de télécommunication selon la revendication 7, les première et seconde portes principales (130, 135, 150, 155, 230, 235, 250, 255) coopérant pour couvrir une entière partie avant (102, 202) de l'intérieur (108, 208) du cadre lorsque les première et seconde portes principales (130, 135, 150, 155, 230, 235, 250, 255) sont toutes les deux fermées.

9. Cadre de télécommunication selon la revendication 7, les première et seconde portes principales (130, 135, 150, 155, 230, 235, 250, 255) étant espacées l'une de l'autre lorsque les deux sont fermées.

10. Cadre de télécommunication selon la revendication 7, comprenant en outre un trajet d'acheminement de câbles (114) s'étendant horizontalement entre les première et seconde portes d'accès aux câbles (132, 137, 152, 157, 232, 237, 252, 257).

11. Cadre de télécommunication selon la revendication 10, le trajet d'acheminement de câbles (114, 214) étant défini par un caniveau horizontal (118, 218) disposé au niveau de la partie inférieure (105, 205) du corps de cadre (101, 201).

12. Ensemble cadre comprenant un premier cadre de télécommunication (100) selon les revendications 1 à 11 et un second cadre de télécommunication (200) selon les revendications 1 à 11, le premier cadre de télécommunication (100) définissant un intérieur (108) ;
et un second cadre de télécommunication (200) définissant un intérieur (208), le second cadre (200) comprenant au moins une seconde porte principale (235, 255) ayant une seconde porte d'accès aux câbles (237, 257), la seconde porte d'accès aux câbles (237, 257) étant conçue pour se déplacer entre des positions ouverte et fermée avec la seconde porte principale (235, 255) et étant conçue pour se déplacer entre des positions de blocage et de déblocage par rapport à la seconde porte principale (235, 255) ;
la première porte principale (130, 150) du premier cadre (100) étant située à proximité de la seconde porte principale (235, 255) du second cadre (200), et les première et seconde portes d'accès aux câbles (132, 152, 237, 257) fournissant un espace continu (145, 145') menant aux intérieurs (108, 208) des premier et second cadres (100, 200) lorsque les première et seconde portes d'accès aux câbles (132, 152, 237, 257) sont au moins partiellement en position de déblocage et lorsque les première et seconde portes principales (130, 150, 235, 255) sont en position fermée.

13. Procédé de gestion de fibre optique (140) à travers des cadres de télécommunication (100) selon les revendications 1 à 12 comprenant les étapes consistant à :
fournir un premier cadre de télécommunication (100) selon les revendications 1 à 12, le premier cadre de télécommunication (100) définissant un intérieur (108) dans lequel des composants de gestion de fibre optique (113) sont disposés, le premier cadre (100) comprenant au moins un premier agencement de porte (120), le premier agencement de porte (120) étant conçu pour se déplacer le long d'un premier trajet (P1) entre une position ouverte et une position fermée, le premier agencement de porte (120) couvrant au moins une partie d'une partie avant (102) de l'intérieur (108) du cadre lorsque le premier agencement de porte (120) est en position fermée et le premier agencement de porte (120) permettant l'accès à l'intérieur (108) du cadre lorsque le premier agencement de porte (120) est en position ouverte ;
déplacer une section mobile (123, 127, 132, 137, 152, 157) du premier agencement de porte (120) au moins partiellement le long d'un deuxième trajet (P2) d'une position de blocage à une position de déblocage sans déplacer le premier agencement de porte (120) le long du premier trajet (P1), le déplacement de la section mobile (123, 127, 132, 137, 152, 157) du premier agencement de porte (120) le long du deuxième trajet (P2, P2') fournissant un espace d'accès aux câbles (117, 117') entre le premier agencement de porte (120) et la partie inférieure (105) du cadre (100) ;
déplacer au moins une fibre optique (140) à l'intérieur (108) du cadre à travers l'espace d'accès aux câbles (117, 117') ; et
déplacer la section mobile (123, 127, 132, 137, 152, 157) du premier agencement de porte (120) en position de blocage pour couvrir l'espace d'accès aux câbles (117, 117').
